# EUROPÄISCHE PATENTSCHRIFT

(11) **EP 0 361 008 B1**
(45) Veröffentlichungstag und Bekanntmachung des Hinweises auf die Patenterteilung: **31.03.1993**
(21) Anmeldenummer: 89113492.6
(22) Anmeldetag: 22.07.1989
(51) Int. Cl.: B60P 1/44

(54) **Hubladebühne für Fahrzeuge**
Vehicle tail lift platform
Plate-forme de hayon de véhicule

(30) Priorität: 29.09.1988 DE 3833066
(43) Veröffentlichungstag der Anmeldung: 04.04.1990
(73) Patentinhaber: MBB Förder- und Hebesysteme GmbH, 27738 Delmenhorst (DE)
(72) Erfinder: Knobling, Manfred, D-2872 Hude (DE); Wiels, Bernhard, D-2900 Oldenburg (DE)
(74) Vertreter: MEISSNER, BOLTE & PARTNER Patentanwälte

(56) Entgegenhaltungen:
- DE-A- 3 228 829
- DE-U- 8 812 331
- FR-A- 2 574 723

## Beschreibung

Die Erfindung bezieht sich auf eine Hubladebühne nach dem Oberbegriff des Anspruchs 1.

Eine derartige Hubladebühne ist aus der FR-A-25 74 723 bekannt. Bei dieser aus einer Ladeplattform bestehenden Hubladebühne wird das Heben und Senken der Lasten mit einer Hubeinrichtung durchgeführt, wofür eine entsprechende Steuer- und Antriebseinrichtung der Ladeplattform zugeordnet ist. Die Ladeplattform ist dabei unter Zischenschaltung eines Gelenkes mit einem sich an einem Schwingkopf des Gelenkes abstützenden fahrzeugseitig angelenkten Betätigungszylinder verbunden und kann nach einem Zusammenklappen unter den Pritschenboden des Lastfahrzeuges manuell geschwenkt werden.

Diese bekannte Hubladebühne ist unbefriedigend, da das Bedienen weitgehend manuell durchgeführt werden muß. Außerdem ist für das Ausrichten der Plattform auf Gefällstrecken ein zusätzlicher in der Plattform angeordneter Betätigungszylinder erforderlich.

Weiterhin ist es aus der DE-A-32 28 829 bekannt, bei einer faltbaren und unter den Pritschenboden eines Lastfahrzeuges schwenkbaren Ladeplattform eine Stütze für die eingeklappte Ladeplattform vorzusehen. Diese aus einer Rolle bestehende Stütze ist am sogenannten Unterfahrschutzprofil angebracht und erlaubt dem gefalteten Endteil der Ladeplattform ein leichtes Ein- und Ausschwenken durch Abrollen an der Rolle, aber ein selbsttätiges Schwenken der Plattform ist damit nicht möglich.

Der Erfindung liegt daher die Aufgabe zugrunde, eine Hubladebühne der gattungsgemäßen Art zu schaffen, die in einfacher und schneller Weise zur Ebene des Pritschenbodens relativ verstellbar ist und in selbsttätiger Weise in eine Fahrstellung unterhalb des Pritschenbodens verschwenkbar ist.

Diese Aufgabe wird erfindungsgemäß durch die kennzeichnenden Merkmale des Anspruches 1 gelöst. Weitere vorteilhafte Merkmale beinhalten die Unteransprüche.

Die mit der Erfindung hauptsächlich erzielten Vorteile bestehen darin, daß die Hubladebühne über die beiden Betätigungszylinder unter einem Winkel zur Ebene des Pritschenbodens relativ verstellbar wird, so daß bei einem Standort des Fahrzeuges auf einer Straße mit Gefälle eine Position in einer horizontalen Ebene einstellbar ist.

Durch die Anordnung eines Steuernockens an einem Betätigungszylinder, der mit einer Kurvenscheibe eines zwischengeschalteten Gelenks an der Ladeplattform beim Verschwenkvorgang zusammenwirkt, wird neben einem Verschwenken ein selbsttätiges Einfalten der zusammengelegten Ladeplattform ermöglicht. Hierdurch ist keine wesentliche manuelle Tätigkeit der Bedienperson mehr erforderlich.

Nach einem erfolgten selbsttätigen Herumschwenken der Ladeplattform in eine Lage über die Lotrechte hinaus, liegt sie an einer Rolle an und kann aus dieser Stellung heraus über den weiteren Betätigungszylinder in eine Fahrposition unterhalb des Pritschenbodens verschwenkt werden. Dieser Betätigungszylinder wird über eine Schalteinrichtung, die von einer federbelasteten Rolle aktiviert wird, angesteuert.

Die Betätigungszylinder können über eine Steuereinheit auch so geschaltet werden, daß die Ladeplattform nach Einnahme einer Hebeposition so angesteuert wird, daß die Verschwenkbewegung selbsttätig in eine Hubbewegung übergeht, d.h., daß der mit dem Lenker verbundene Betätigungszylinder entsprechend angesteuert wird.

Zum Ausfalten der Ladeplattform kann diese beispielsweise durch eine Rolle oder dergleichen über die Lotrechte gedrückt werden, wodurch eine Steuereinheit dann den entsprechenden Betätigungszylinder aktiviert, der den Senkvorgang und den Ausfaltvorgang steuert.

Ein Ausführungsbeispiel der Erfindung ist in der Zeichnung dargestellt und wird im folgenden näher beschrieben. Es zeigen:
- Fig. 1: eine schematische Darstellung der Hubladebühne mit abgelegter Ladeplattform und maximal angehobener Ladeplattform,
- Fig. 2: eine schematische Darstellung einer Hubladebühne in abgelegtem Zustand mit den einzelnen Zwischenstellungen bis zur Fahrstellung unterhalb des Pritschenbodens eines Fahrzeuges,
- Fig. 3: ein Gelenk in einer Seitenansicht mit verbundener Ladeplattform
- Fig. 4: eine Draufsicht auf das Gelenk gemäß Fig. 3,

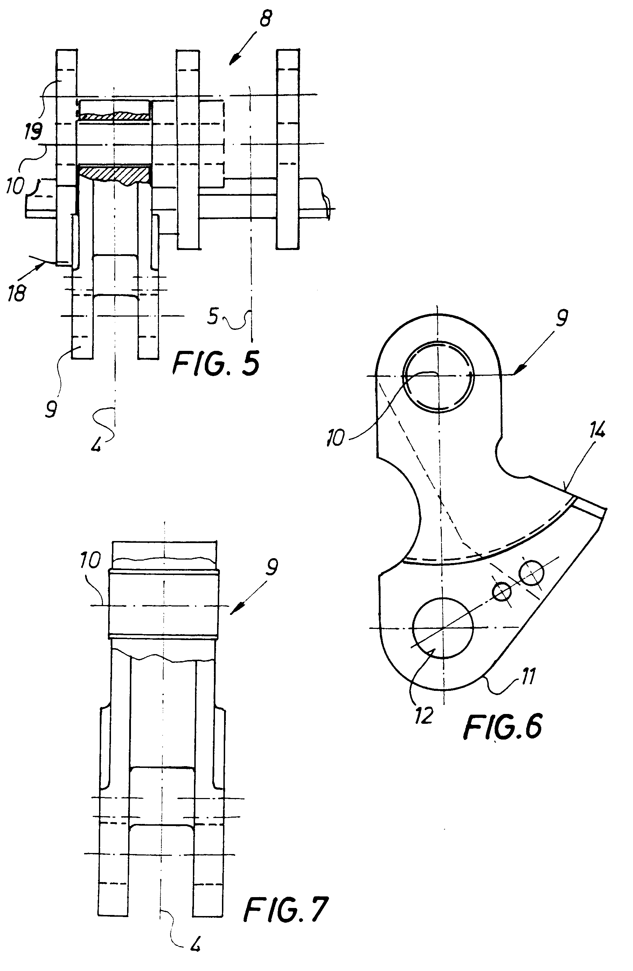

- Fig. 5: eine Ansicht in Pfeilrichtung Z auf das Gelenk gemäß Fig. 3 gesehen,

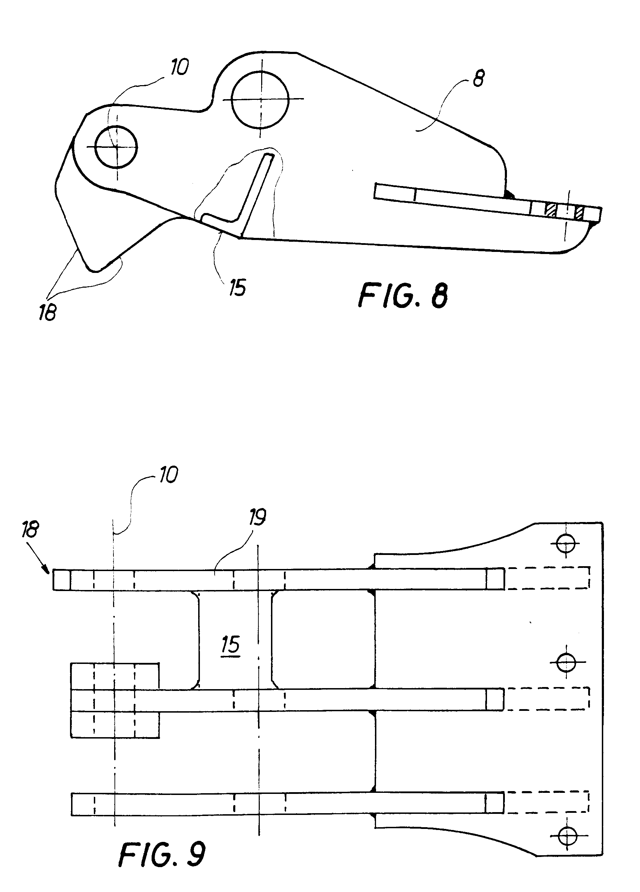

- Fig. 6: eine Seitenansicht auf einen Schwingenkopf des Gelenks,
- Fig. 7: eine Vorderansicht des Schwingenkopfes gemäß Fig. 6,
- Fig. 8: eine Seitenansicht auf einen Kragarmkopf des Gelenks und
- Fig. 9: eine Draufsicht auf den Kragarmkopf gemäß Fig. 8.

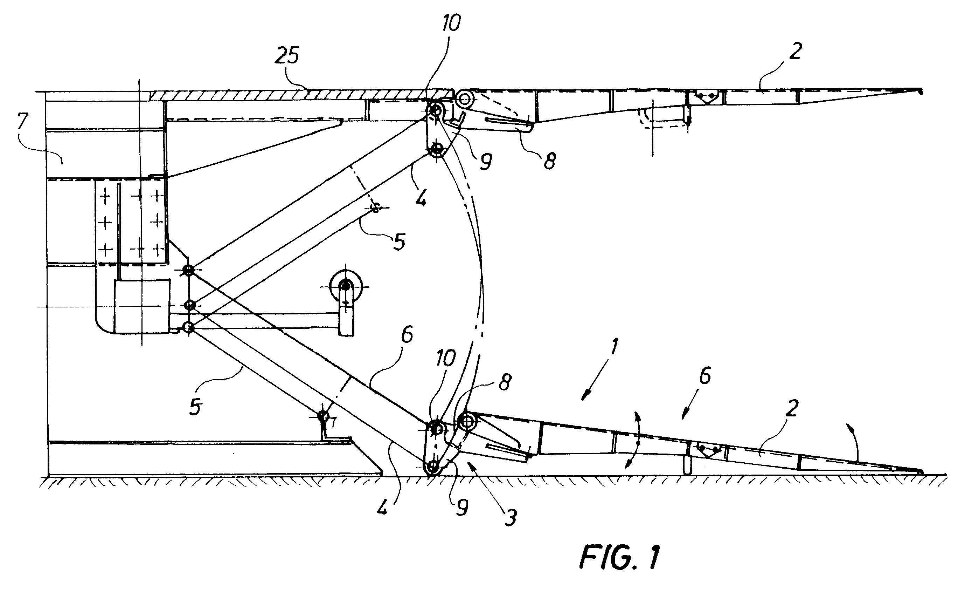

Eine Hubladebühne 1 eines Fahrzeuges umfaßt eine zweiteilige Ladeplattform 2, die im wesentlichen über Gelenke 3 mit Betätigungszylinder 4 und 5 und Lenkern 6 am Fahrzeug 7 verschwenkbar gehalten ist, wie insbesondere in Fig. 1 näher gezeigt wird. Die Anlenkung der Betätigungszylinder und der Lenker am Fahrzeugbau ist nicht näher dargestellt.

Das Gelenk 3 besteht aus einem mit der Ladeplattform 2 verbundenen Kragarmkopf 8, an dem ein Schwingenkopf 9 um eine horizontale Achse 10 verschwenkbar angelenkt ist. Mit dem Schwingenkopf 9 ist der erste Betätigungszylinder 4 an seinem unteren freien Ende 11 im Lagerpunkt 12 gehalten. Auf der horizontalen Achse 10 ist der Lenker 6 gelagert, der endseitig abgewinkelt ist und sich mit diesem Ende 13 wie der Schwingenkopf 9 annähernd in einer Lotrechten ausrichtet. Mit dem Lenker 6 ist ein unter einem Winkel α zu diesem angestellter zweiter Betätigungszylinder 5 angeordnet, der im wesentlichen eine Hubbewegung bewirkt.

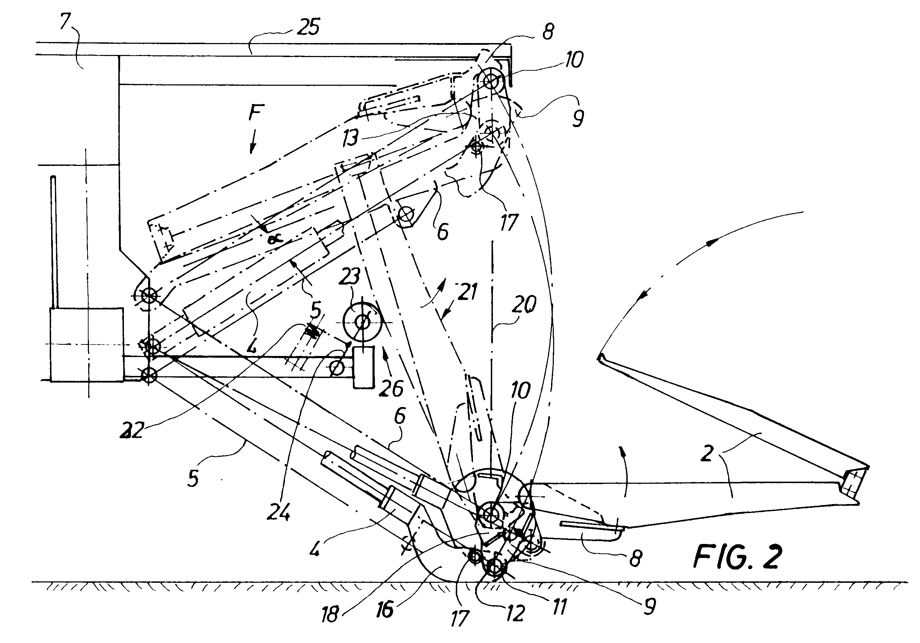

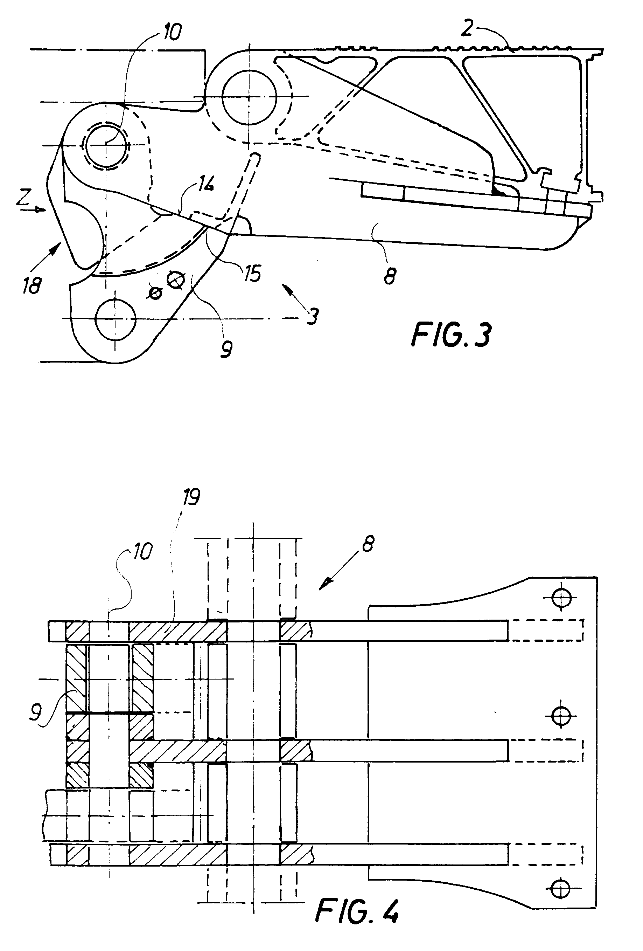

Wie insbesondere Fig. 2 in Verbindung mit Fig. 3 zeigt, ist das Gelenk 3 in der Weise ausgeführt, daß der Schwingenkopf 9 einen Absatz 14 aufweist, auf dem sich in der Gebrauchsstellung G der Ladeplattform 2 (Fig. 1 und2) der Kragarmkopf 8 über eine Fläche 15 abstützt.

Am Kopf 16 des ersten Betätigungszylinders 4 ist ein Steuernocken 17 angeordnet, der mit einer Kurvenscheibe 18 an einem Schenkel 19 des Kragarmkopfes 8 in Eingriff steht. Hierzu wird der Betätigungszylinder 4 ausgefahren, wodurch sich der Steuernocken 17, der als Rolle oder Gleitstück ausgeführt sein kann, der Kurvenbahn nähert und den Kragarmkopf 8 mitsamt der Ladeplattform 2 entsprechend dem Formverlauf der Kurvenscheibe 18 verschwenkt.

In einfacher Weise kann auch durch Verkürzen oder Verlängern des Zylinders 4 die Annäherung des Steuernockens 17 zur Kurvenscheibe 18 geändert werden, so daß der Verschwenkwinkel der Ladeplattform 2 entsprechend eingestellt werden kann. Das Verlängern oder Verkürzen des Zylinders 4 kann durch ein einfaches Hinein- oder Herausschrauben des Zylinderkopfes 16 erfolgen. Auch kann der Steuernocken 17 zur Kurvenscheibe 18 so eingestellt werden, daß lediglich eine Stellung der Ladeplattform 2 bis etwa zur Lotrechten 20 erfolgt.

Wie Fig. 2 zeigt, erfolgt eine Verschwenkung der Ladeplattform 2, nachdem de Plattformspitze manuell umgeklappt ist, in eine über die Lotrechte 20 hinausgehende Position 21. In dieser Stellung drückt die Ladeplattform 2 gegen eine von einer Feder 22 abgestützten Rolle 23, welche mit einem Schalter 24 in Verbindung steht. Dieser schaltet in Abhängigkeit von der Lage der zurückgeschwenkten Ladeplattform 2 und bewirkt eine Ansteuerung des zweiten Betätigungszylinders 5, der die Ladeplattform 2 in die Fahrstellung F (Fig. 2) unterhalb des Pritschenbodens 25 verschwenkt.

Eine Verstellung der Ladeplattform 2 in eine Fahrstellung F erfolgt gemäß Fig. 2 in der Weise, daß die Bedienperson die Plattformspitze um ca. 180° auf den hinteren Teil der Plattform verschwenkt. Die Bedienperson aktiviert nun eine sogenannte Einfaltbewegung. Hierdurch wird der Betätigungszylinder 4 ausgefahren und die Ladeplattform 2 verschwenkt. Der Steuernocken 17 nähert sich hierbei der Kurvenscheibe 18 und fährt bei weiterem Verschwenken auf diese Kurvenscheibe 18 drückend vorwärts. Die Plattform 2 entfernt sich hierbei vom Schwingenkopf 9 und wird in der Folge in seiner vorläufigen Endstellung 21 über die Lotrechte 20 verschwenkt. Dabei wird die federbelastete Rolle 23 eingedrückt und in dieser Position wird der Schalter 24 aktiviert, der dann den Betätigungszylinder 5 ansteuert und die Ladeplattform 2 in die Fahrstellung F verschwenkt.

Das Ausfalten erfolgt sinngemäß in umgekehrter Reihenfolge, wobei die federbelastete Rolle 23 in der gesenkten Position die Plattform 2 über die Lotrechte 20 drückt, da beim Absenken der Ladeplattform 2 der Betätigungszylinder 4 bereits freigeschaltet wurde.

Wenn die Ladeplattform 2 in eine Hebeposition verschwenkt ist, können die Betätigungszylinder 4 und 5 so geschaltet werden, daß die Verschwenkbewegung in eine Hubbewegung übergeht ohne eine weitere Eingriffsmaßnahme der Bedienperson.

## Patentansprüche

1. Hubladebühne für Fahrzeuge mit einer in Transportlage unter das Fahrzeug verschwenkbaren Ladeplattform, die über Lenker am Fahrzeugaufbau gehalten und mittels fahrzeugseitig befestigter Betätigungszylinder verstellbar angelenkt ist, wobei die Ladeplattform unter Zwischenschaltung eines Gelenkes mit einem sich an einem Schwingenkopf des Gelenkes abstützenden ersten Betätigungszylinder verbunden ist, dadurch **gekennzeichnet,** daß der erste Betätigungszylinder (4) einen mit einem Kragarmkopf (8) des Gelenkes (3) in Eingriff bringbaren Steuernocken (17) umfaßt und daß der zweite Betätigungszylinder (5) am Lenker (6) angreift und über eine, von der zurückgeschwenkten Ladeplattform (2) belastete Rolle (23) angesteuerte Schalteinrichtung (26) zum Verschwenken der Ladeplattform (2) in eine Fahrposition (F) betätigt.

2. Hubladebühne nach Anspruch 1, dadurch gekennzeichnet, daß der Kragarmkopf (8) des Gelenks (3) mit der Ladeplattform (2) verbunden ist und an diesem um eine horizontale Achse (10) der Schwingenkopf (8) untergreift und die Ladeplattform (2) in einer Gebrauchsstellung (G) abstützt.

3. Hubladebühne nach den Ansprüchen 1 oder 2, dadurch gekennzeichnet, daß mit dem unteren freien Ende (11) des Schwingenkopfes (9) der erste Betätigungszylinder (4) und mit dem auf der horizontalen Drehachse (10) gelagerten Lenker (6) der zweite Betätigungszylinder (5) verbunden ist.

4. Hubladebühne nach einem oder mehreren der vorhergehenden Ansprüche, dadurch gekennzeichnet, daß der Kragarmkopf (8) des Gelenks (3) einen als Kurvenscheibe (18) ausgebildeten Schenkel (19) umfaßt, an der bei einer Ausfahrbewegung des ersten Betätigungszylinders (4) der Steuernocken (17) den Kragarmkopf (8) mit der Ladeplattform (2) verschwenkend anliegt.

5. Hubladebühne nach einem oder mehreren der vorhergehenden Ansprüche, dadurch gekennzeichnet, daß die Schalteinrichtung (26) einen den Betätigungszylinder (5) in eine Ausfahrposition steuernden Schalter (24) umfaßt, der in Abhängigkeit von der Lage der zurückgeschwenkten und in einer Faltposition stehenden Ladeplattform (2) betätigt wird.

6. Hubladebühne nach einem oder mehreren der vorhergehenden Ansprüche, dadurch gekennzeichnet, daß der erste Betätigungszylinder (4) mit seinem Steuernocken (17) und der zweite Betätigungszylinder (5) gemeinsam über eine Steuereinheit derart schaltbar sind, daß die Verschwenkbewegung selbsttätig in eine Hubbewegung umsteuerbar ist.

## Claims

1. A load lifting device for vehicles with a loading platform which pivots underneath the vehicle in transit, which is retained on the structure of the vehicle by swinging arms and which is adjustably pivoted by means of an actuating cylinder fixed to the vehicle, the loading platform being connected, with the interposition of a joint, to a first actuating cylinder which is supported on a rocker head of the joint, characterised in that the first actuating cylinder (4) comprises a control cam (17) which can be brought into engagement with a jib end (8) of the joint (3) and that the second actuating cylinder (5) engages the swinging arm (6) and actuates it into a driving position (F) by means of a switching arrangement (26) for pivoting the loading platform (2) and controlled by a roller (23) which is loaded by the loading platform (2) in its swung-back position.

2. A load lifting device according to claim 1, characterised in that the jib end (8) of the joint (3) is connected to the loading platform (2) and engages under it about a horizontal shaft (10) of the rocker head (8) and supports the loading platform (2) in an operating position (G).

3. A load lifting device according to claims 1 or 2, characterised in that the first actuating cylinder (4) is connected to the lower free end (11) of the rocker head (9) and that the second actuating cylinder (5) is connected to the swinging arm (6) which is mounted on the horizontal rotating shaft (10).

4. A load lifting device according to one or more of the preceding claims, characterised in that the jib end (8) of the joint (3) comprises an arm (19) which is configured as a cam plate (18) with which engages, upon an extension movement of the first actuating cylinder (4),the control cam (17) pivoting the jib end (18) with the loading platform (2).

5. A load lifting device according to one or more of the preceding claims, characterised in that the switching arrangement (26) comprises a switch (24) which sets one of the actuating cylinders (5) to an extended position and which is actuated in dependence upon the position of the loading platform (2) when swung back in a folded position.

6. A load lifting device according to one or more of the preceding claims, characterised in that the first actuating cylinder (4) together with its control cam (17) and the second actuating cylinder (5) can be together switched by a control unit such that the pivoting motion can be automatically changed over into a lifting motion.

## Revendications

1. Plate forme de chargement élévatrice pour véhicules avec une plate forme de chargement pivotable en-dessous du véhicule en condition de transport, plate forme qui est articulée et réglable au moyen de vérins de commande fixés du côté du véhicule, la plate forme de chargement étant reliée par montage intermédiaire d'une articulation à un premier vérin de commande s'appuyant sur une tête oscillante de cette articulation,
caractérisée
- en ce que le premier vérin de commande (4) comporte une came de commande (17) pouvant être amenée en prise avec une tête d'un bras en porte à faux (8) de l'articulation (3) et
- en ce que le deuxième vérin de commande (5) est appliqué sur le bras (6) et opère le pivotement de la plate forme de chargement (2) dans une position de route (F) par l'intermédiaire d'un dispositif de commutation (26) excité par le galet (23) chargé par la plate forme de chargement (2) pivotée en arrière.

2. Plate forme de chargement élévatrice selon la revendication 1,
caractérisée
- en ce que la tête du bras en porte à faux (8) de l'articulation (3) est liée à la plate forme de chargement (2) et est accrochée à celle-ci par un axe horizontal (10) de la tête oscillante (8) et supporte la plate forme de chargement dans une position de fonctionnement (6).

3. Plate forme de chargement élévatrice selon les revendications 1 ou 2, caractérisée
- en ce que le premier vérin de commande (4) est relié à l'extrémité libre inférieure (11) de la tête oscillante (9) et le deuxième vérin de commande (5) est relié au bras (6) monté sur l'axe de rotation horizontal (10).

4. Plate-forme de chargement élévatrice selon une ou plusieurs des revendications précédents,
caractérisée
- en ce que la tête du bras en porte à faux (8) de l'articulation (3) comprend un branche (19) réalisée en disque à came (18), sur laquelle lors du mouvement de sortie du premier vérin de commande (4) la came de commande (17) appuie la tête du bras en porte à faux (8) en pivotant avec la plate forme de chargement (2).

5. Plate forme de chargement élévatrice selon une ou plusieurs des revendications précédentes,
caractérisée
- en ce que le dispositif de commutation (26) comprend un commutateur (24) commandant le vérin de commande (5) dans une position de sortie, commutateur qui est actionné en fonction de la position de la plate forme de chargement (2) pivotée vers l'arrière et se trouvant en position repliée.

6. Plate-forme de chargement élévatrice selon une ou plusieurs des revendications précédentes,
caractérisée
- en ce que le premier vérin de commande (4) avec sa came de commande et le deuxième vérin de commande (5) peuvent être commutés en commun par une unité de commande, de façon que le mouvement de pivotement soit automatiquement inversé en mouvement de levage.
